Europäisches Patentamt

(19) European Patent Office

Office européen des brevets

(11) Publication number: **0 170 301**
**A2**

(12) # EUROPEAN PATENT APPLICATION

(21) Application number: **85200534.7**

(22) Date of filing: **04.04.85**

(51) Int. Cl.⁴: **B 03 B 9/06**

(30) Priority: **09.04.84 NL 8401119**
**02.11.84 NL 8403334**

(43) Date of publication of application:
**05.02.86 Bulletin 86/6**

(84) Designated Contracting States:
**AT BE CH DE FR GB IT LI LU NL SE**

(71) Applicant: **Fläkt AB**
**Box 81001 Sikla Alle 13**
**S-104 81 Stockholm(SE)**

(72) Inventor: **Visser, Pieter**
**Weidelaan 13**
**NL-2451 XG Leimuiden(NL)**

(72) Inventor: **Berentsen, Wim**
**Tromplaan 3**
**NL-3931 AG Woudenberg(NL)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) **A method and an apparatus for processing domestic refuse.**

(57) A method of processing domestic refuse in which, after removal of coarse components from the refuse, first the organically rich fraction is separated therefrom, thereafter successively metal, paper, rags, glass, plastics and finally the lighter fraction, whereafter the residue is dumped or incinerated. For the separation of the organically rich fraction, use can be made of a flat screen. Another possibility is to use two tandem-arranged trommel screens having different mesh sizes.

./...

FIG.1

Title: A method and an apparatus for processing domestic refuse.

The present invention relates to a method of processing domestic refuse and is characterized in that, after removal of coarse components from the refuse by means e.g. of a grab, first the organically rich fraction is separated therefrom, thereafter successively metal, paper, rags, glass, plastics and finally the lighter fraction, whereafter the residue is dumped and incinerated.

Such a method has the advantage that by first removing the organically rich fraction, no fouling thereof can take place due to mixing with heavy metals, such as cadmium. Moreover, the flow of material to be processed further on in the installation is strongly reduced. A third advantage is that due to the separation of the organically rich fraction, which is mostly considerably moister than the remaining part of the refuse, the further processing thereof is considerably better, because a better separation in e.g. a downstream wind sifter is obtained.

A further important advantage of the method according to the present invention is that it provides a number of marketable products.

When separating the organically rich fraction, use can be made of a flat screen, allowing a very good separation. Moreover, no breakage of glass contained in the domestic refuse occurs thereby.

In accordance with another method according to the present invention, the separation of the organically rich fraction can also be effected by means of two tandem-disposed trommel screens having different mesh sizes. Due to this arrangement, a rather small layer thickness can be used in the drums, so that an effective separation and a slight chance of obstruction of each mesh is possible. Besides, no or hardly any mixing takes place, so that the organically rich fraction is not fouled by e.g. heavy metals, such as cadmium.

In this arrangement, it is possible to feed the organic material separated by means of the first trommel screen and the simultaneously separated light paper, plastics, iron and metal into the second trommel screen of finer mesh size, and to feed the coarser refuse screened by means of the second trommel screen into a magnetic separator wherein the magnetizable iron is removed, while the residual fraction, containing substantially organic refuse, is discharged.

The present invention further relates to an apparatus for performing the method and is characterized in that the entire apparatus is accommodated in a closed area, thus producing an environmentally clean situation.

With a view to avoiding problems with the closed bags of domestic refuse during the supply of domestic refuse, a bag ripper may be installed above a refuse

feed conveyor. The bag ripper may consist of one or more chains with spikes arranged parallel to said feed conveyor. The facing parts of said chains and the feed conveyor are movable in the same direction, thus preventing damage to the refuse contained in the bags, e.g. breakage of glass and the like.

If use is made for processing domestic refuse of a trommel screen, comprising a jacket within which a rotary screen cylinder is disposed, the screen cylinder may be provided at least adjacent the inlet end with spikes or daggers. Screening holes may be provided between the spikes or daggers.

The part of the screen cylinder facing away from the spikes or daggers may be provided at least internally with reinforcing ribs extending longitudinally of the screen cylinder, so that the screen cylinder can be made of thinner material. This has the advantage that the risk of obstruction of the screen meshes or holes due to clinging dirt is reduced. Another advantage of the use of the reinforcing or stiffening ribs is that these reduce the wear of the screen cylinder material.

In performing the method according to the present invention, when the organically rich fraction is fed into a fermentation area and subsequently screened, the screening can take place in various fractions. The residue is then separated from the coarsest fraction. An apparatus for separating residues from the coarse compost fraction may consist of an inclined screen-like surface provided on the open side of a housing connected to a compressed air source. The chosen method of preparation of the compostable fraction makes it possible to substantially reduce the fermentation period, naturally on condition that a regular intermixing in the fermentation area takes place.

For the sake of completeness, reference is made to the Dutch magazine "De Ingenieur", volume 91, No. 37, of September 13, 1979, pp. 642-648, describing an apparatus for separating domestic refuse, which has the drawback that the refuse is first reduced before being separated, so that no proper separation is possible, and the various components may be fouled by other refuse. Because the organically rich fraction is separated only further on in the apparatus, not only fouling thereof by e.g. heavy metals occurs, but moreover, the entire apparatus contains a substantial flow of material which is moist during its movement through the entire apparatus, resulting in an inadequate separation at the location of the wind sifter.

Furthermore, Dutch patent application 65,11164 shows a method and an apparatus for separating domestic refuse, in which the refuse, after removal of coarse components therefrom, is first intimately mixed so that the material can be metered continuously to a conveyor arranged behind the mixer. It is precisely the object of the present invention to avoid mixing as much as possible.

Reference is also made to US patent 3,524,594, wherein, in contrast to the present invention, likewise pre-mixing takes place. A further drawback of this known method is that the entire flow of material is moved through the entire apparatus. Flows of material possibly separated are again combined further on, in contrast to the present invention.

Some embodiments of the apparatus for processing domestic refuse according to the present invention will now be described, by way of example, with reference to the accompanying drawings, in which:

Fig. 1 is a diagrammatic side view of an apparatus for processing domestic refuse;

Fig. 2 is a top view of the apparatus in Fig. 1;

Fig. 3 shows an enlarged cross-section on the line III-III of Fig. 2;

Fig. 4 shows an enlarged cross section on the line IV-IV of Fig. 2;

Fig. 5 is an enlarged view on the line V-V of Fig. 2;

Fig. 6 is an enlarged view on the line VI-VI of Fig. 2;

Fig. 7 is a top view of the composting section with partly exploded parts;

Fig. 8 shows a cross-section on the line VIII-VIII of Fig. 7;

Fig. 9 is a view on the line IX-IX of Fig. 8;

Fig. 10 is a diagrammatic side view of a different embodiment of the apparatus for separating the light fraction;

Fig. 11 is a diagrammatic side view of a different embodiment of an apparatus for processing domestic refuse;

Fig. 12 is a cross-section of a part of the first portion of the first trommel screen used in the apparatus shown in Fig. 11; and

Fig. 13 is a cross-section of a part of the second portion of the first trommel screen used in the apparatus shown in Fig. 11.

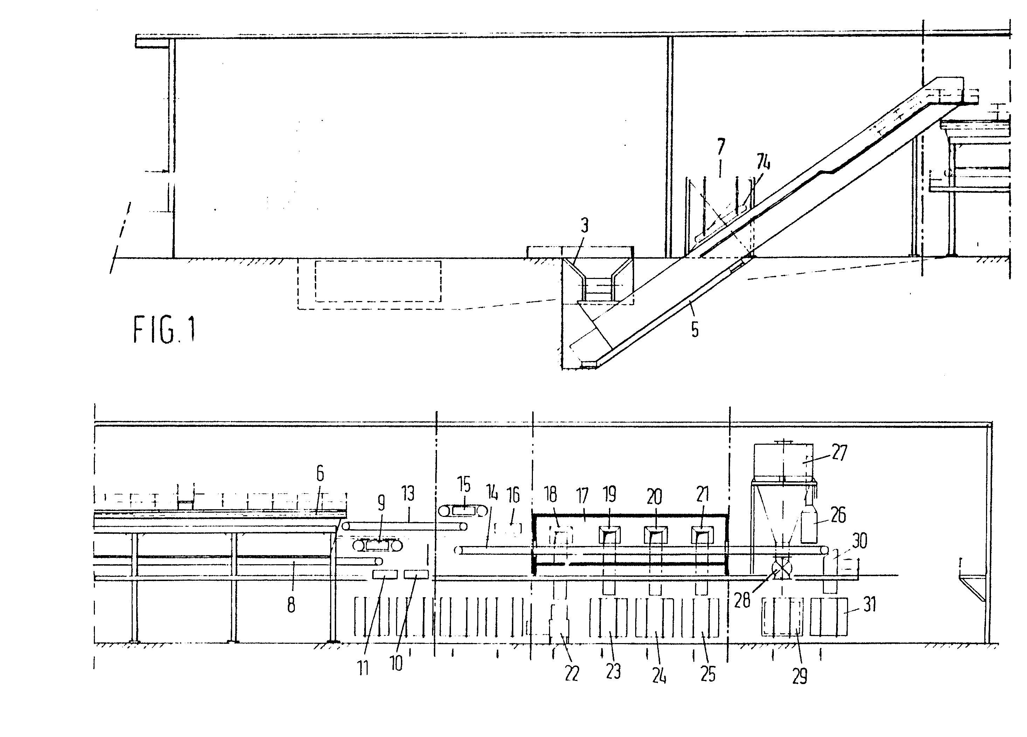

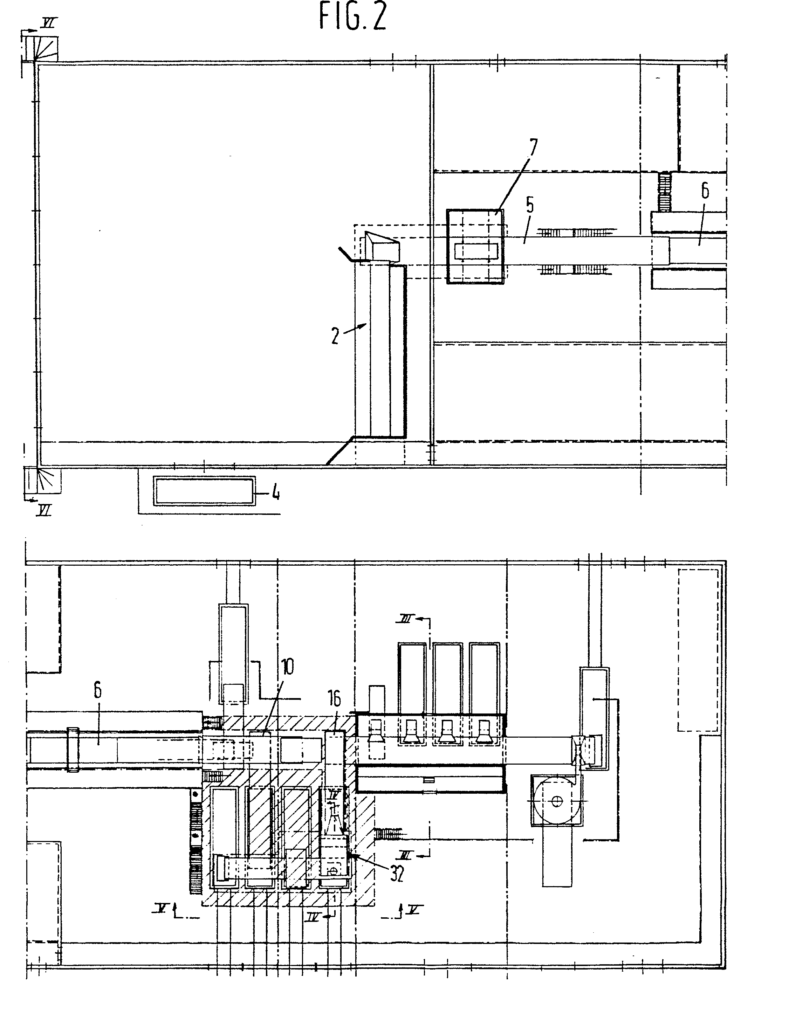

According to Figs. 1-10, an apparatus for processing domestic refuse is provided with a feeding bunker 1 at the bottom of which are one or more conveyors 2 (the drawings show only one), to feed the refuse into a funnel-shaped portion 3. Over the feeding bunker there is a grab, not shown, which may be used to also feed material into the said funnel 3. Said grab (not shown) is also used to remove coarse waste, such as stoves, washing machines and suchlike, from the waste material dumped into the feeding bunker and place them in the coarse waste container 4 located next to the feeding bunker.

From the funnel-shaped portion 3 the refuse is delivered onto a feed conveyor 5, which takes the material to a flat screen 6. Note that a so-called bag ripper 7 is located above the feed conveyor 5. Said bag ripper tears the bags open in passing so that the contents are loose when they reach the flat screen 6. The bag ripper consists of one or more chains 74 with spikes, not shown, which are mounted parallel to the feed conveyor. The parts of the chains facing each other and the feed conveyor can move in the same direction, thus avoiding damage, such as glass breakage etc., to the refuse contained in the bags.

Underneath the flat screen a conveyor 8 is installed to discharge the material, consisting of a compostable fraction to be de-ironed and a residual fraction. An overbelt magnet 9, which is arranged at the downstream end of the conveyor 8, discharges any iron from the compostable fraction towards an iron discharge conveyor 10.

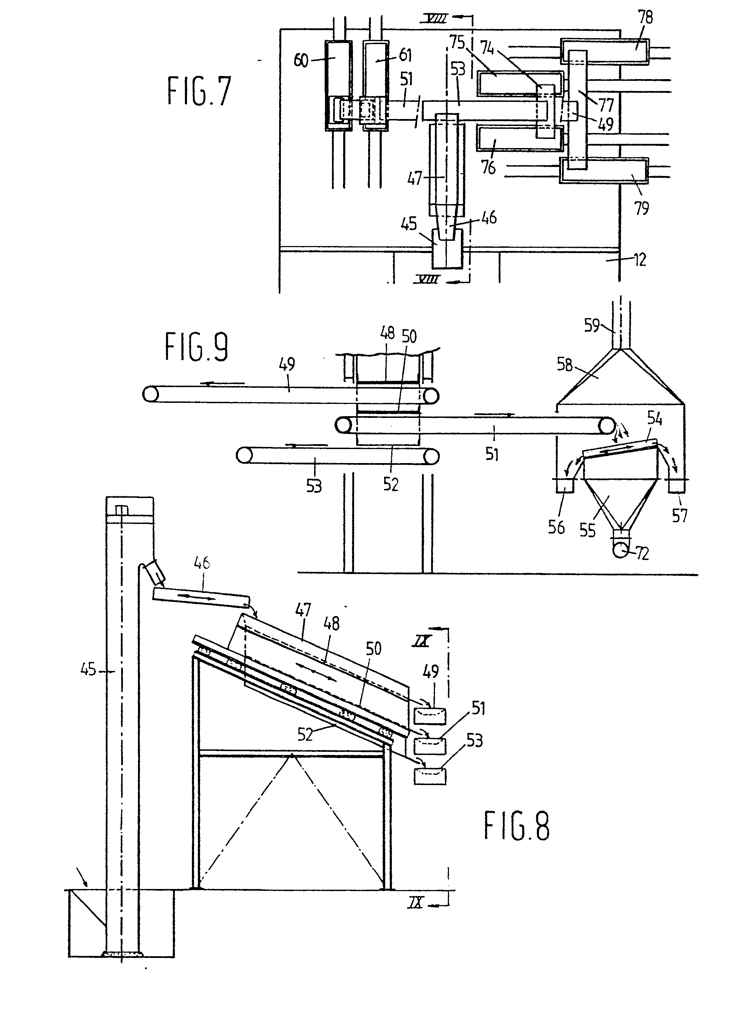

The fraction remaining on conveyor 8 is discharged to a composting area 12 (see fig. 7) by means of a conveyor 11.

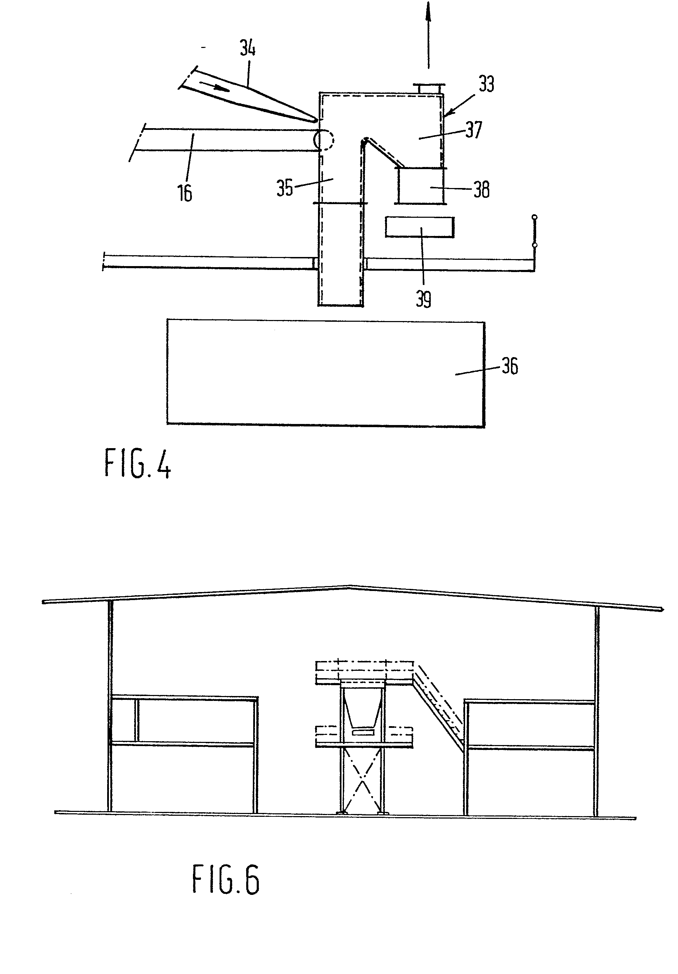

Material coming from flat screen 6 is carried to a conveyor 14 by a conveyor 13. An over-belt magnet 15 located over the downstream end of conveyor 13 removes the tin plate and iron from the refuse supplied. Cross conveyor 16 takes this tin plate and iron into a tin plate/iron separator 17, which will be described in more detail with reference to Fig. 4.

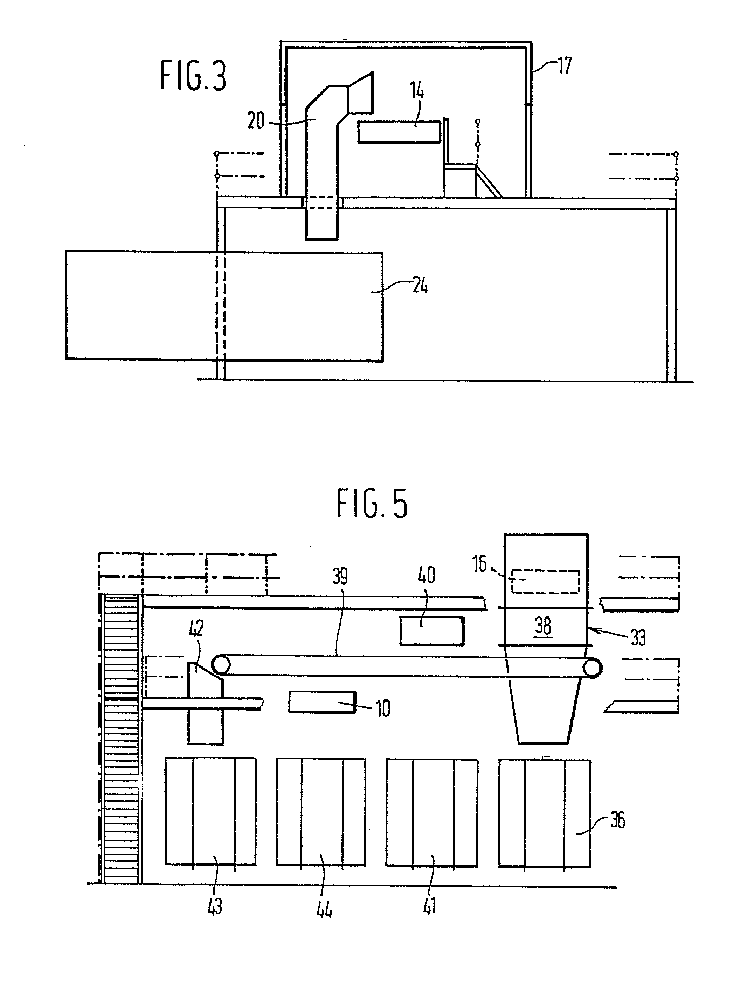

Said conveyor 14 extends to the end of the processing apparatus, partly through an enclosed area 17 (see also Fig. 3). In area 17 there are four sorting places, where paper, rags, glass and plastics are successively removed from the refuse supplied by conveyor 14. For each of these materials funnels 18, 19, 20 and 21, respectively, extend downwards in the immediate vicinity of the conveyor. Underneath the first funnel 18, through which paper is discharged, there is arranged a paper baler 22, while underneath funnels 19, 20 and 21 are located containers 23, 24 and 25, respectively.

Downstream of the enclosed area and above conveyor 14, an extraction nozzle 26 is located through which the light fraction, consisting mainly of smaller particles of paper, plastics and textile, are removed to a cyclone 27.

At the bottom the cyclone is equipped as usual with a rotary feeder 28 via which the material is fed into a container 29 or to a baler, not shown here. In addition, a shredder (not shown)may be used.

At the end of conveyor 14 there is a funnel 30 through which the residue is discharged into a container 31. Container 31 can be used to take this residue to an incinerator (not shown).

As mentioned earlier, the tin plate and iron carried away on conveyor 16 can be fed into a tin plate/ iron separator 32, a full side view of which is shown in Fig. 4. The discharge end of conveyor 16 is located in a housing 33. Above the said discharge end, a pneumatic-air supply duct 34 is installed. The iron found in the tin plate and iron material supplied by conveyor 16 will drop down immediately through discharge pipe 35 at the discharge end, subsequently to be carried to a container 36. The tin plate supplied, however, under the influence of its ballistic track and aided by the pneumatic air supplied by duct 34, will be thrown into a funnel-shaped portion 37, which terminates in a shredder 38, under which a conveyor 39 is situated (see Fig. 5). The shredder reduces the tin plate supplied, thereby loosening a fair amount of rests, such as food and paint rests and suchlike. An over-belt magnet 40 (Fig. 5)suspended over conveyor 39 discharges the tin plate into a container 41. The residue is transported to a container 43 via a funnel 42. Between containers 41 and 43, there is another container 44, above which the discharge end of conveyor 10 is located.

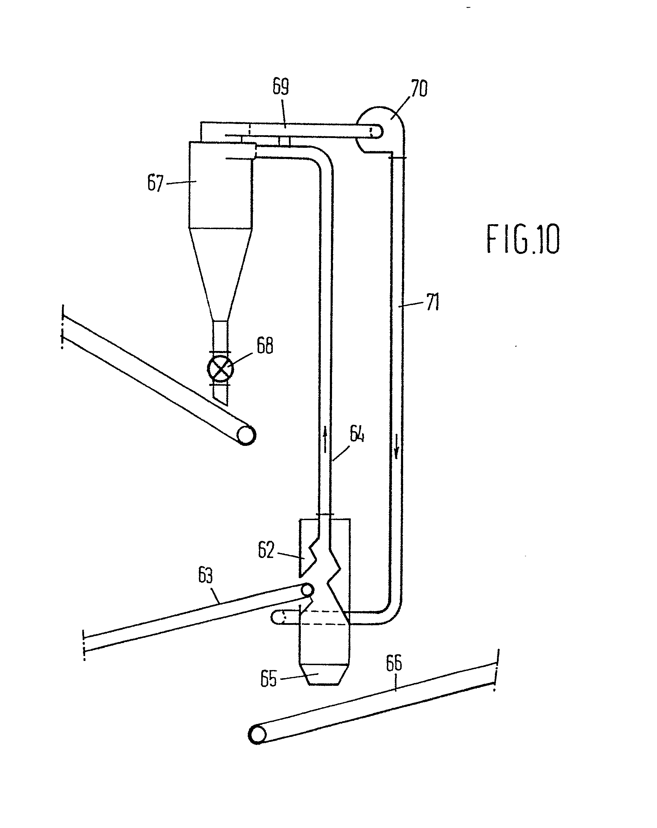

As observed earlier, the compostable fraction separated by flat screen 6 is carried to a fermentation area 12 by conveyor 11. Here, the actual composting process takes place in the usual manner. As area 12 is provided with standard equipment, no further description thereof will be given. A feed conveyor 45 (not shown) terminates in the area (see Figs. 7 and 8) and carries the fermented compost to a vibrating screen 47 by means of a vibrating trough 46. Vibrating screen 47 is provided with an upper screening gauze 48 through which residue is supplied to a conveyor 49. Beneath screening gauze 48 is another screening gauze 50, through which the coarse compost fraction is discharged to a conveyor 51. Beneath screening gauze 50 a discharge trough 52 takes the fine compost fraction to a discharge conveyor 53.

As may be seen, especially from Fig. 9, there is a so-called air table 58 for transporting the coarse compost fraction at the downstream end of conveyor 51, which air table is equipped with a screen 54 mounted on a funnel-shaped housing 55 with at the bottom a fan 72. By means of the said screen 54 and the air rising through it, the coarse compost supplied is then separated into a coarse compost fraction and a residue. Here, the coarse compost fraction is discharged through a funnel 56 and the residue through a funnel 57. At the top of air table 58 is a discharge 59 for the removal of dust to a filter, not shown.

Under the funnels 56 and 57 are containers 60 and 61, respectively, which, like all previously described containers, may consist of wagons movable on rails, not specified in detail.

The top view in Fig. 7 shows a cross conveyor 74, which is located at the discharge end of conveyor 53 for transporting the fine fraction, adapted to transport the material supplied to either one of two containers 75 or 76.

In the top view in Fig. 7, and to the right of cross conveyor 74, the end of conveyor 49 can be seen, as well as a reversible cross conveyor 77, through which the residue may be carried to either one of two containers 78 or 79, as desired.

The above described conveyor 53 for the fine compost leads to a belt or travelling screen 72, by means of which can be separated from the fine compost supplied any residue still present therein.

As may be seen from the drawings, this part of the apparatus is a double construction, so that either the fine compost or the residue may be discharged without interruption.

The drawings show that all parts described above have supports, but to avoid confusion, no further description will be given thereof.

A different embodiment for an apparatus separating the light fraction, consisting e.g. of small particles of paper, plastics and textile, uses a zig-zag type of wind sifter 62 as shown in Fig. 10. The discharge end of a conveyor 63, which is identical to the above conveyor 14, discharges into wind sifter 62. As the inside wall of the wind sifter is constructed in steps, larger though lighter items such as planks are prevented from being carried along. A suction duct 64 is fixed at the top of wind sifter 62, while there is a discharge funnel 75 at the bottom of the wind sifter through which the residue is discharged onto conveyor 66.

The upper part of suction duct 64 is connected to a cyclone 67, which has a rotary feeder 68 at the bottom. Cyclone 67 has a duct 69 at the top which is connected to a fan 70. The outlet of fan 70 is connected to wind sifter 62 by a duct 71, thus obtaining a virtually closed air circuit.

It will be clear from the above that within the scope of the present invention, a large number of variations are possible.

Especially from Fig. 6, it can be seen that the apparatus for processing domestic refuse can be housed in its entirety in an enclosed area 73 so that nuisance to the environment is minimized.

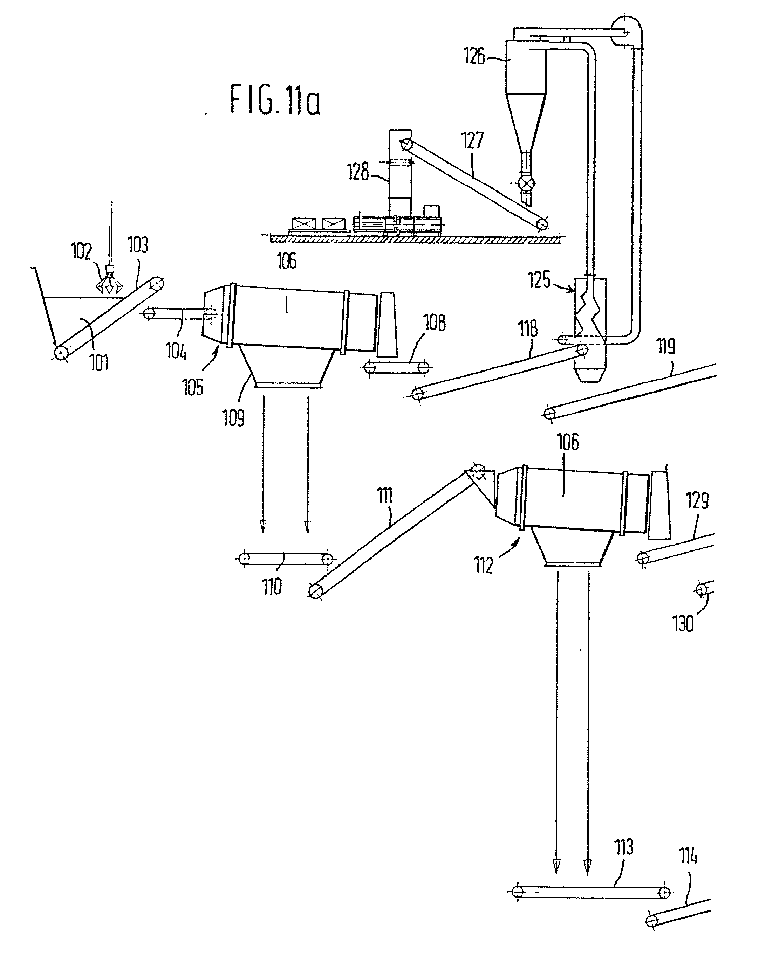

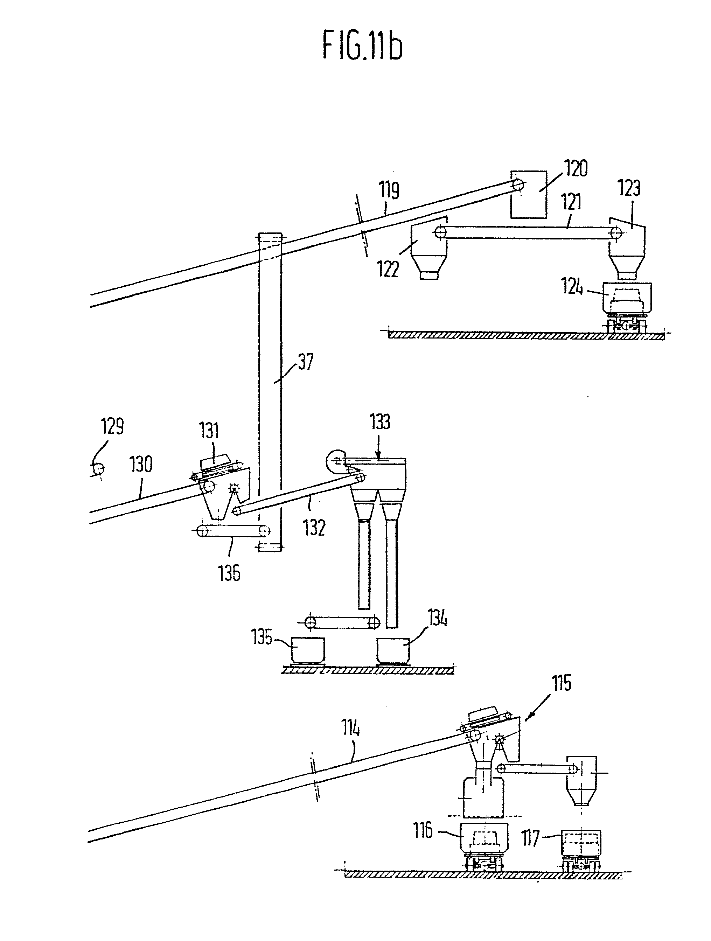

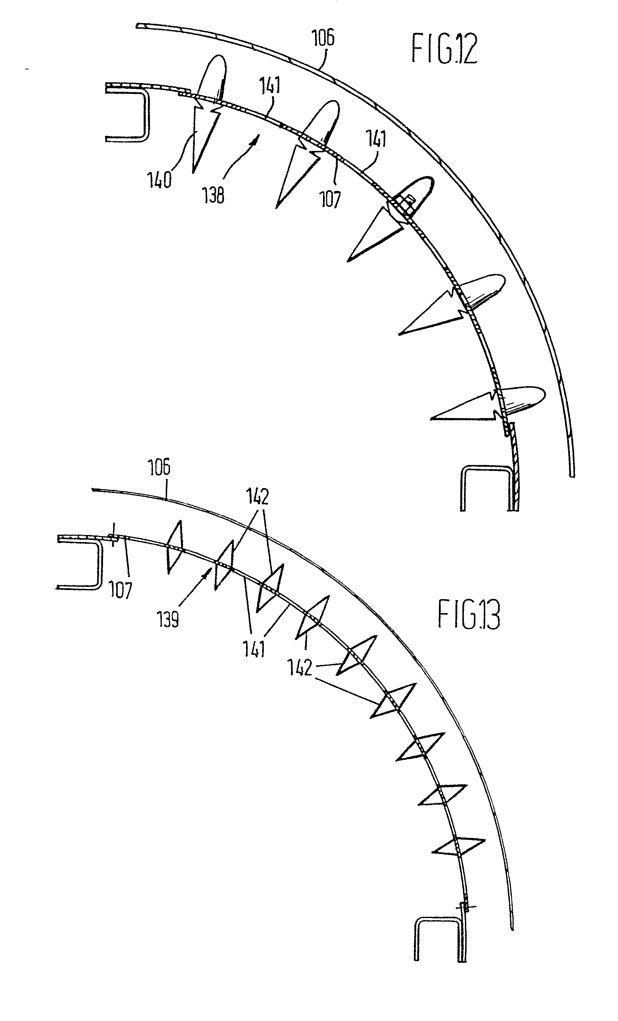

As may be seen from the embodiment shown in Figs. 11-13, in which the drives are not shown, an apparatus for processing domestic refuse is equipped with a feeding funnel 101, into which the refuse is dumped by means, not illustrated either. Above the feeding funnel 101 there is a grab 102 for the removal of larger refuse components, such as stoves and the like. Below feeding funnel 101, there is located a discharge conveyor 103, which connects to a conveyor 104. These conveyors 103 and 104 are used to transport the refuse to a first trommel screen 105. Trommel screen 105 is provided as usual with a jacket 106 inside which a rotating screen cylinder 107 is fitted (see Figs. 12 and 13). On one side, trommel screen 105 is connected to a belt conveyor 108, which discharges the overflow fraction, while the sieved-out fraction is discharged via a funnel-shaped section 109 of jacket 106 to a conveyor 110. The latter is connected to feed conveyor 111, which feeds the sieved-out fraction to a second trommel screen 112 having a smaller mesh size. A description of trommel screen 112 does not seem to be required at this point, as it is one of a commonly known type. The sieved-out fraction from trommel screen 112 is transported via a conveyor 113 and a feed conveyor 114 to a metal separator 115 of the type described in applicants' Dutch patent application mentioned earlier, no. 74.01119.

The fractions then remaining, i.e. an organically rich fraction and a metal fraction, are carried to a fermentation area and the wholesale trade by means of trolleys 116 and 117, respectively.

The overflow fraction from the first trommel screen 106 is transported via the above conveyor 108 and a conveyor 118 connected to it, to a discharge conveyor 119, which carries the overflow fraction through a housing 120 (to avoid dust) to a reversible conveyor 121. The reversible conveyor 121 then takes the overflow fraction through hoppers 122 or 123 to a lorry 124 under these bunkers which transports the overflow fraction to a dump.

As may be seen from Fig.11, there is wind siffer 125 at the downstream end of conveyor 118 to discharge paper, plastic foil and the lighter (dry) textile particles to a cyclone 126. A wind sifter, a cyclone and the connections in between were described in full in applicants' senior Dutch patent application, mentioned in the above.

Cyclone 126 connects to a conveyor 127 through which the material is fed to a known per se bale press 128. If necessary, paper, plastics and textiles may also be separated manually or mechanically.

A conveyor 129 takes the overflow fraction from the second trommel screen 112 to a conveyor 130, above the downstream end of which a metal separator131 is located. Conveyor 132 takes the iron originating from metal separator 131 to a tin plate/iron separator 133, from where the tin plate is discharged via a lorry 134 and the iron by way of a lorry 135. A metal and tin plate/iron separator is generally known or described in applicants' above Dutch patent application. If desired, a shredder and screen may be added to the assembly described to remove paint rests and suchlike from the tin plate.

The residual fraction from iron separator 131 is carried by a conveyor 136 and a feed conveyor 137 to discharge conveyor 119, which discharges the overflow fractions.

It goes without saying that any number of variations is possible within the scope of the present invention of the apparatus described above.

Now the embodiment of the first trommel screen 105 will be briefly discussed by means of which a coarse fraction consisting of organic material with light paper, plastics, iron and the like is separated. From the partial cross sections of the circumferene of trommel 107 shown in Figs. 12, 13, it may be seen (as already mentioned) that the trommel has a jacket 106and a screen cylinder 107 rotating therein by means, not shown.

The screen cylinder actually consists of two parts: the first part 138 shown in Fig. 12, and the second part 139 shown in Fig. 13.

The first part 138 is equipped with a large number of conical, in this case loosening spikes or daggers 140 attached with a nuts-and-bolts connection 144 covered by a hood 143 to the part of the screen cylinder 107 shown as a dagger plate. Between the spikes or daggers 140, screen cylinder 107 is provided with screening holes 141.

The second part 139 of screen cylinder 107, enclosed by the stationary jacket 106, has screening holes 141 similar to the ones in the first part 138. Inside as well as outside, between the screening holes of the second part, reinforcing ribs 142 are provided in longitudinal direction of the trommel. Reinforcing ribs 142 may either be welded to the screen cylinder 107, as shown in the drawings, or attached to it in another manner. The use of reinforcing ribs makes it possible to construct the screen cylinder of thinner plate material, so that the chance of obstruction of the screening holes due to clinging dirt is diminished. Another advantage of reinforcing or stiffening ribs is that wear of the trommel screen material is minimized. It should be remembered that it is considerably more costly to replace a trommel screen than it is to replace the reinforcing ribs on it.

Once more, it stands to reason that within the scope of the present invention a large number of variations is possible as regards the construction of the trommel screen.

CLAIMS

1.     A method of processing domestic refuse, characterized in that, after removal of coarse components from the
refuse, first the organically rich fraction is separated
therefrom, thereafter successively metal, paper, rags,
glass, plastics and finally the lighter fraction, whereafter
the residue is dumped or incinerated.

2.     A method according to claim 1, characterized
in that a flat screen is used for separating the organically
rich fraction.

3.     A method according to claim 1, characterized
in that the separation of the organically rich fraction,
takes place by means of two tandem-arranged trommel screens
having different mesh sizes.

4.     A method according to claim 3, characterized
in that the organic material separated by means of the
first trommel screen, and the simultaneously separated
light paper, plastics, iron and metal, are fed into the
second smaller sized trommel screen, and the coarser refuse
screened by means of the second trommel screen is fed
into a magnetic separator wherein the magnetizable iron
is removed, while the residual fraction, containing substantially organic refuse, is discharged.

5.     An apparatus for performing the method according
to one or more of the preceding claims, characterized
in that the entire apparatus is accommodated in a closed area.

6.        An apparatus for performing the method according
to any one of claims 1 or 2, characterized by a bag ripper
arranged above the domestic refuse conveyor.

7.        An apparatus according to claim 6, characterized
in that the bag ripper comprises one or more rotary chains
extending parallel to the feed conveyor, said chains having
spikes.

8.        An apparatus according to claim 7, characterized
in that the lower parts of said chains move in the same
direction as the upper parts of the feed conveyor.

9.        An apparatus for performing the method according
to claims 3 or 4, comprising at least one trommel screen
consisting of a jacket accommodating a rotary screen cylinder,
characterized in that the screen cylinder of the first
trommel screen is provided at least adjacent the inlet
end with spikes or daggers.

10.        An apparatus according to claim 9, characterized
in that screening holes are provided between the spikes
and daggers.

11.        An apparatus according to claims 9 or 10, characterized in that the portion of the screen cylinder facing
away from the spikes or daggers is provided at least internally with reinforcing ribs extending longitudinally of
the cylinder.

12.        A method according to any one of claims 1-4,
in which the organically rich fraction is fed into a fermentation area, and is subsequently screened, characterized in that screening takes place in three fractions.

13. A method according to claim 12, characterized in that the residue is separated from the coarsest fraction.

14. An apparatus for performing the method according to claim 13, characterized by an inclined screen-like surface applied to the open side of a housing connected to a compressed air source.

FIG.1

# FIG.2

FIG.3

FIG.5

FIG.4

FIG.6

FIG.7

FIG.9

FIG.8

FIG.10

FIG.11a

# FIG.11b

FIG.12

FIG.13